# EUROPEAN PATENT APPLICATION

(11) **EP 4 450 392 A1**
(43) Date of publication of application: **23.10.2024**
(21) Application number: 24164716.3
(22) Date of filing: 20.03.2024
(51) Int. Cl.: B64D 13/02, B01D 45/12, B64D 13/06, F02C 6/08

(54) **AIR PRESSURISATION SYSTEM**

(30) Priority: 20.04.2023 GB 202305823
(71) Applicant: Rolls-Royce plc, London N1 9FX (GB)
(72) Inventor: Murray, Christopher A, Derby, DE24 8BJ (GB)
(74) Representative: Rolls-Royce plc

(57) **Abstract**

There is provided an air pressurisation system (400, 401) for an aircraft (800). The air pressurisation system comprises a blower compressor (420) configured to be mechanically coupled to a spool (440) of a gas turbine engine (10) and configured to receive a first inlet flow of air from a bypass duct (22) of the gas turbine engine; a delivery line (310) configured to convey air compressed by the blower compressor to a cabin pressurisation system of the aircraft; a core bleed line (410) configured to selectively provide a second inlet flow of gases from a compressor (412) of the gas turbine engine to the delivery line (310) in an augmented air supply mode of the air pressurisation system; and an air/oil separator (500, 600) arranged in the core bleed line for removing contaminating oil and oil mist from the second inlet flow of gases before the second inlet flow of gases is provided to the delivery line. There is also provided an air/oil separator (500, 600) for the air pressurisation system (400, 401).

## Description

### TECHNICAL FIELD

The present disclosure relates to air pressurisation systems for providing air to an airframe system, particularly a cabin pressurisation system. The present disclosure also concerns an aircraft comprising an airframe, a gas turbine engine and an air pressurisation system.

### BACKGROUND

It is known to pressurise a cabin of an aircraft using an air pressurisation system which makes use of engine bleed air which is bled from a compressor section of the core of a gas turbine engine. Bleeding high pressure air from the gas turbine engine reduces its efficiency and thereby increases its fuel consumption.

It is therefore desirable to provide an improved air pressurisation system. Air pressurisation systems which make use of air which is taken from a lower pressure source of a gas turbine engine, such as a bypass duct, and which subsequently compress the air prior to delivering it to the cabin are also known. Some exemplary air pressurisation systems are described in EP3517436 B1, EP3517437 B1 and EP3517438 B1.

### SUMMARY

According to an aspect of the present disclosure, there is provided an air pressurisation system for an aircraft, the air pressurisation system comprising: a blower compressor configured to be mechanically coupled to a spool of a gas turbine engine and configured to receive a first inlet flow of air from a bypass duct of the gas turbine engine; a delivery line configured to convey air compressed by the blower compressor to a cabin pressurisation system of the aircraft; a core bleed line configured to selectively provide a second inlet flow of gases from a compressor of the gas turbine engine to the delivery line in an augmented air supply mode of the air pressurisation system; and an air/oil separator arranged in the core bleed line for removing contaminating oil and oil mist from the second inlet flow of gases before the second inlet flow of gases is provided to the delivery line.

The air/oil separator may be a centrifugal air/oil separator. A rotor of the air/oil separator may be configured to rotate about a rotor axis of the air/oil separator in order to separate oil from the second inlet flow of gases. The air/oil separator may comprise one or more vanes. At least a portion of the second inlet flow of gases may be directed to pass over the vanes. Rotation of the air/oil separator may be driven by virtue of the gases passing over the vanes.

The air/oil separator comprises a housing and an air/oil inlet for the second inlet flow of gases to enter the housing. The air/oil inlet may be arranged such that the second inlet flow of gases enters the housing in a tangential direction of the air/oil separator. The second inlet flow of gases entering the housing may be directed to flow over the vanes in a direction with a component in the tangential direction. Additionally or alternatively, the second inlet flow of gases may be directed by the air/oil separator to flow over the plurality of vanes in a direction with a radial component relative to the rotor axis. The air/oil separator may comprise an air outlet for the air to pass out of the air/oil separator. The air outlet may be in fluidic communication with a hollow interior of the rotor.

The air separator may comprise a filter, e.g. a volume of metal foam, arranged in a flow of the gases between the air/oil inlet and the air outlet. The filter may be configured to separate oil and oil mist from the flow of gases passing between the air/oil inlet and the air outlet through the filter. The filter, e.g. the volume of metal foam may be coupled to the rotor.

The air/oil separator may comprise a first channel for gases to pass from the air/oil inlet towards the air outlet. The air/oil separator may further comprise a second channel for gases to pass from the air/oil inlet towards the air outlet. The filter, e.g. the metal foam, may be arranged at least partially within the first channel. The vanes may be arranged at least partially within the second channel.

The air/oil separator may comprise an oil outlet for oil separated from the second inlet flow of gases by the filter, e.g. the metal foam, within the first channel to leave the air/oil separator. The oil outlet may be formed in a wall of the housing. The housing may comprise a first annular chamber extending about the rotor. The oil outlet may be an outlet from the first annular chamber. The air/oil inlet may be an inlet into the first annular chamber.

The air/oil separator may further comprise a seal arranged in the second channel for limiting a flow of gases through the second channel.

The housing may further comprise a second annular chamber extending about the rotor. The second annular chamber may be spaced axially along the rotor from the first annular chamber. The second annular chamber may be in fluidic communication with the first annular chamber via the first and second channels. The air/oil separator may further comprise a third channel for gases to pass from the second annular chamber towards the air outlet. A further filter, e.g. a volume of metal foam, may be arranged within the third channel.

The air/oil separator may comprise a further oil outlet formed in a wall of the housing for oil separated from the second inlet flow of gases, e.g. by the further filter within the third channel, to leave the housing. The further oil outlet may be an outlet from the second annular chamber.

The air/oil separator may comprise a catalyst material configured to catalyse a reaction of volatile organic compounds within the air pressurisation system. The catalyst material may be provided between the air/oil inlet and the air outlet, e.g. within the first, second and/or third channels and/or within the interior space of the rotor. For example, catalyst the material may be provided on an exterior surface of the filter and/or the further filter, e.g. on a wetted surface of the volume of metal foam or further volume of metal foam.

The air/oil separator may further comprise a motor generator configured to drive rotation of the air/oil separator in a driving mode of the motor generator. The motor generator may be configured to be driven by the air/oil separator and generate electricity in a driven mode of the motor generator. The air pressurisation system may comprise a controller configured to control the operation of the motor generator to operate in the driving mode or the driven mode in order to maintain a speed of rotation of the air/oil separated within a predetermined threshold range of rotation speeds.

The air/oil separator may further comprise one or more air bearings, such as aerostatic or aerodynamic bearings. The one or more air bearings may be configured to receive a portion of the second inlet flow of gases in order to support rotation of the rotor. One or more of the air bearings may be arranged within a hollow interior of the rotor. One or more of the air bearings may be arranged to receive air which has passed through the first channel. Additionally or alternatively, one or more of the air bearings may be arranged to receive air which has passed through the third channel.

The system may further comprise an oil outlet line for delivering oil separated by the air/oil separator to an oil breather of the gas turbine engine.

According to another aspect of the present disclosure, there is provided an air/oil separator for use in the above-mentioned air pressurisation system.

According to another aspect of the present disclosure, there is provided an air pressurisation system for an aircraft, the air pressurisation system comprising: a delivery line configured to convey air to a cabin pressurisation system of the aircraft; a core bleed line configured to selectively provide a flow of gases from a compressor of the gas turbine engine to the delivery line; and an air/oil separator arranged in the core bleed line for removing contaminating oil from the flow of gases before the flow of gases is provided to the delivery line.

An aircraft may comprise an airframe, a gas turbine engine and the above mentioned air pressurisation system. The air treatment apparatus may be located within an airframe of the aircraft and the blower compressor is located within the gas turbine engine.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

The gearbox may be a reduction gearbox (in that the output to the fan is a lower rotational rate than the input from the core shaft). Any type of gearbox may be used. For example, the gearbox may be a "planetary" or "star" gearbox, as described in more detail elsewhere herein.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein. In particular, features described in relation to the air/oil separator of the first mentioned air pressurisation system may apply equally to any other air/oil separators mentioned herein.

### BRIEF DESCRIPTION OF THE DRAWINGS

Embodiments will now be described by way of example only with reference to the accompanying drawings, which are purely schematic and not to scale, and in which:
**Figure 1** is a sectional side view of a gas turbine engine;
**Figure 2** is a close up sectional side view of an upstream portion of a gas turbine engine;
**Figure 3** is a partially cut-away view of a gearbox for a gas turbine engine;
**Figure 4** is a schematic view of an air pressurisation system, according to arrangements of the present disclosure, for supplying air to an airframe system;
**Figure 5** is a schematic cross-sectional view of an air/oil separator for the air pressurisation system shown in Figure 4, according to arrangements of the present disclosure;
**Figure 6** is a schematic cross-sectional view of another air/oil separator for the air pressurisation system shown in Figure 4, according to arrangements of the present disclosure;
**Figure 7** is a schematic diagram of an aircraft including an airframe, a gas turbine engine and an air pressurisation system.

### DETAILED DESCRIPTION

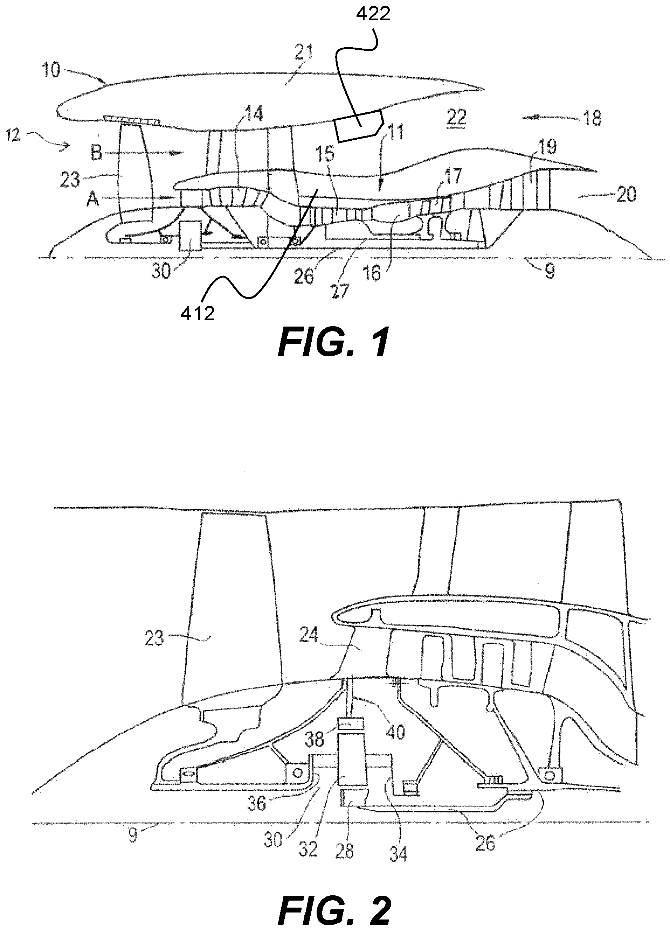

**Figure 1** illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The bypass duct 22 may comprise an engine bypass duct port 422 for supplying air from the bypass duct to an air pressurisation system or the like. The engine core 11 may also comprise an engine core port for supplying air from a compressor stage of the engine core 11 (such as the low pressure compressor 14 or the high-pressure compressor 15) to an air pressurisation system or the like. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in **Figure 2****.** The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to process around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e., not including the fan 23) respectively and/or the turbine and compressor stages that are connected together by the interconnecting shaft 26 with the lowest rotational speed in the engine (i.e., not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

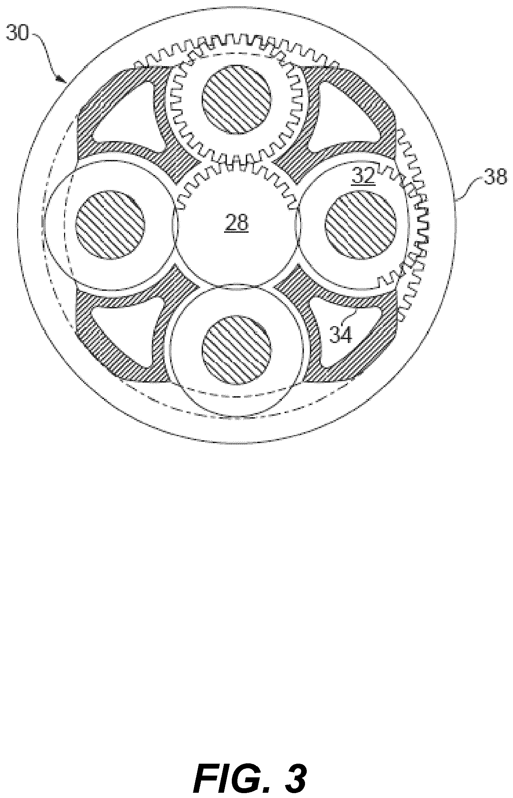

The epicyclic gearbox 30 is shown by way of example in greater detail in **Figure 3****.** Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g., the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 18, 20 meaning that the flow through the bypass duct 22 has its own nozzle 18 that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

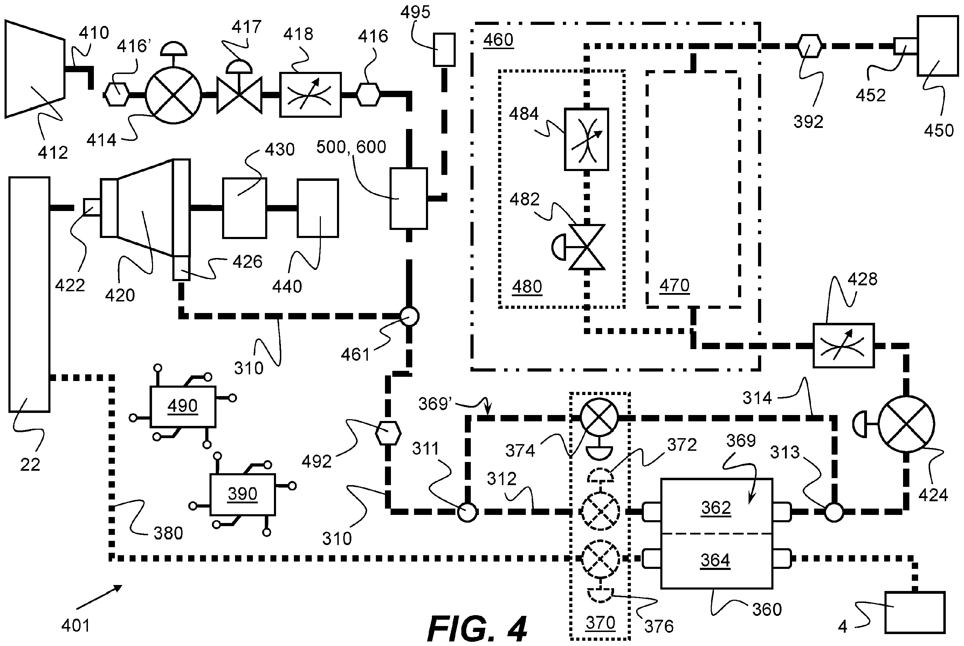

An air pressurisation system 401, according to arrangements of the present disclosure, for supplying air to an airframe system 450 is shown schematically in **Figure 4****.** The air pressurisation system 401 comprises a blower compressor 420 configured to be mechanically coupled to a spool 440 of a gas turbine engine, such as the gas turbine engine 10. The expression "spool" is used herein to denote a shaft of the engine which interconnects a compressor and a turbine of the engine core, and/or engine components which rotate together with such an engine shaft (e.g., the compressor and turbine interconnected by the shaft, and associated rotating components such as drums and disks). In the arrangement depicted in Figure 4, the air pressurisation system 401 comprises a variable transmission 430 for mechanically coupling the blower compressor 420 to the spool 440.

The variable transmission 430 allows a rotational speed of the blower compressor 420 to be decoupled from a rotational speed of the spool 440, so that a performance of the air pressurisation system 401 is not solely governed by an operating speed of the gas turbine engine (e.g., it can be controlled to operate at a target speed independent of the rotational speed of the spool, and/or at a variable speed ratio relative to the rotational speed of the spool). Inclusion of a variable transmission 430 within the air pressurisation system 401 therefore provides more versatile and adaptable means for supplying pressurised air to an airframe system. Various suitable variable transmission types will be apparent to those of ordinary skill in the art. For example, the variable transmission 430 may comprise an electric variator, as described in EP 3517436 B1.

The blower compressor 420 is configured to operate in a blower mode in which the blower compressor 420 is driven to rotate by the spool 440 to draw a first inlet flow of gases from an engine bypass duct port 422 and to discharge compressed gases to a blower compressor discharge port 426 for supply to an airframe port 452 for an airframe air use (i.e., a particular application or purpose for which the air is supplied to the airframe). Flows of gases referred to within the present specification, such as the first inlet flow of gases and the compressed gases discharged from the blower compressor may be, or be substantially comprised of, compressed air. Unless otherwise specified, the terms "flows of gases" and "flows of air" may be used interchangeably herein. It will be appreciated that when a flow of gases is referred to as a flow of air, then the flow may additionally comprise one or more other gases, e.g. contaminants, such as oil, oil mist, volatile organic compounds, burnt and unburnt hydrocarbons and/or any other contaminants present within the flow of air/gases.

A delivery line 310 extends from the blower compressor discharge port 426 to the airframe port 452. The airframe port 452 is in, or configured to be in, fluid communication with the airframe system 450.

The airframe air use may be, for example, aircraft pressurisation or cargo bay smoke eradication. The blower compressor 420 is generally configured to compress the first inlet flow of air by converting kinetic energy of the first inlet flow of air into pressure energy and heat energy. The blower compressor 420 may be any suitable type of compressor. As shown in the Figure 4, the blower compressor 420 may preferably be a centrifugal compressor.

The engine bypass duct port 422 is in fluid communication with a bypass duct 22 of the gas turbine engine. Accordingly, when operated in the blower mode, the blower compressor 420 is configured to receive the first inlet flow of air from the bypass duct 22 of the gas turbine engine. The blower compressor 420 is further configured to supply the first inlet flow of air to the airframe port 452 for example to pressurise an aircraft cabin.

The first inlet flow of air may be subject to over-pressure and/or over-temperature prevention and/or flow control prior to supply to the airframe port 452. In the arrangements shown in Figure 4, the delivery line 310 comprises a blower compressor shut off valve (SOV) 424 and a blower compressor flow control valve (FCV) 428 for each of these purposes. The SOV 424 may be configured to close in response to the pressure and/or the temperature of the air conveyed by the delivery line being excessive, as described in further detail below.

In the arrangement shown in Figure 4, the air pressurisation system 401 comprises an air treatment apparatus 460. In such arrangements, the delivery line 310 may extend at least partially through the air treatment apparatus 460 to the airframe port 452 for supply to the airframe system 450 for the airframe air use. In other arrangements, the air treatment apparatus 460 may be omitted, or may not form part of the air pressurisation system 401. The air treatment apparatus 460 may be located in the airframe.

The air treatment apparatus 460 comprises an air cycle line 470 and a diversion line 480. The air cycle line 470 may form part of the delivery line 310. The air cycle line 470 is configured to condition gases (e.g. air) received from the blower compressor 420, for example by cooling and/or dehumidifying air received from the blower compressor 420. In other words, a flow of gases through the air cycle line 470 is subject to active conditioning therein so as to change (e.g., reduce) a temperature, a pressure and/or a humidity of the flow of gases prior to supply to the airframe port 452. The air cycle line 470 may comprise, for instance, an air conditioning fan, an air conditioning compressor, an air conditioning turbine, one or more heat exchangers, a condenser, a water extractor and/or a reheater.

The diversion line 480 is configured to bypass the air cycle line 470 such that air received from the blower compressor 420 and conveyed through the diversion line 480 is not subject to active conditioning therein prior to supply to the airframe port 452. The air treatment apparatus 460 is configured to mix air from the air cycle line 470 with air from the diversion line 480 prior to combining the flows for discharge into the delivery line 310, with the delivery line 310 being configured to convey the conditioned air received from the air treatment apparatus 460 to the airframe port 452.

In the arrangement shown in Figure 4, the diversion line 480 comprises a diversion line pressure regulating valve (PRV) 482 and a diversion line flow control valve (FCV) 484. The diversion line PRV 482 is configured to regulate a pressure of gases (e.g., air) in the diversion line 480 prior to mixing with gases (e.g., air) from the air cycle line 470 for supply to the airframe port 452, to prevent supply of gases (e.g., air) at an excessively high pressure. The diversion line PRV 482 is configured to ensure that the pressure of air in the diversion line 480 downstream of the diversion line PRV 482 is no greater than an air supply pressure threshold associated with the airframe system 450. The air supply pressure threshold of the airframe system 450 may be dependent on by the airframe air use for which air is supplied to the airframe system. For instance, when the air pressurisation system 401 is required to supply air to the airframe port 452 for a cabin pressurisation purpose, the airframe system 450 may supply air directly to a cabin of an aircraft. If so, the air supply pressure threshold of the airframe system may be approximately 1 atm or approximately 1 bar (approximately 100 kPa). Accordingly, the diversion line PRV 482 may be configured to ensure that the pressure of air in the diversion line 480 downstream of the diversion line PRV 482 is no more than approximately 1 atm or approximately 1 bar (approximately 100kPa).

The diversion line FCV 484 is configured to control a flow rate (e.g., a mass-flow rate or a volumetric flow rate) of air in the diversion line 480. The air treatment apparatus 460 (for example, a controller of the air treatment apparatus 460) is configured to actuate the diversion line FCV 484 so as to control the flow rate of air in the diversion line 480 which is subsequently mixed with air from the air cycle line 470, to target a temperature of the combined flow for discharge to the airframe system 450.

In the arrangement depicted in Figure 4, the air pressurisation system 401 further comprises a core bleed line 410 configured to provide a second inlet flow of gases from a compressor 412 of a core of the gas turbine engine to the delivery line 310 in an augmented air supply mode of the air pressurisation system 401. Like the first inlet flow of gases, the second inlet flow of gases may comprise, or be substantially comprised of, a second inlet flow of air. Due to the second inlet flow of gases being provided from the compressor 412 of the core of the gas turbine engine, the second inlet flow of gases may be more likely to include particular contaminants, such as oil/oil mist, than the first inlet flow of gases. The core bleed line 410 comprises a core bleed control valve 414 for controlling the supply of the second inlet flow of gases to the delivery line 310. In this example, the core bleed control valve 414 is a solenoid actuated pressure-regulating valve. However, in other examples the core bleed control valve 414 may be otherwise actuated.

The second inlet flow of air does not pass through the blower compressor 420 prior to being provided to the delivery line 310 by the engine core bleed line 410, nor is it subject to any further active compression process prior to being supplied to the delivery line 310. In some examples, the second inlet flow of air does not pass through a precooler device prior to being provided to the delivery line 310 by the engine core bleed line 410. The second inlet flow of air may not be subject to any other kind of active cooling process (i.e., through a dedicated heat exchanger) prior to being supplied to the delivery line 310.

In an unaugmented air supply mode of the air pressurisation system 401, in which a flow demand of the airframe system 450 is met by the first inlet air flow through the cabin blower, the core bleed control valve 414 is fully closed which prevents air being conveyed through the engine core bleed line 410.

The airframe system 450 may be associated with a flow demand for air (e.g., a mass-flow rate demand). The flow demand of the airframe system 450 may be dictated by the airframe air use for which air is supplied to the airframe system. Under certain operating conditions, a flow delivery capacity of the air pressurisation system 401 may not be sufficient to meet the flow demand of the airframe system 450 in the unaugmented air supply mode.

The air pressurisation system 401 may further comprise an air supply mode controller 490. The air supply mode controller 490 may be configured to control the core bleed control valve 414 and thereby selectively operate the air pressurisation system 401 in the augmented air supply mode in which the core bleed control valve 414 is open and in the unaugmented air supply mode in which the core bleed control valve 414 is closed. The air supply mode controller 490 may be configured to receive a flow demand signal which corresponds to the flow demand of the airframe system 450. The flow demand signal may be received from, for example, the airframe system 450.

In the arrangement shown in Figure 4, the engine core bleed line 410 is configured to mix the second inlet flow of air with the first inlet flow of air from the blower compressor 420 at a mixing point 461 located on the delivery line 310 upstream of a bifurcation between the air cycle line 470 and the diversion line 480 (and, preferably, upstream of the air treatment apparatus 460, as shown in Figure 4). The second inlet flow of air may be subject to over-pressure regulation prior to mixing with the first inlet flow of air. For these purposes, in the arrangement of Figure 4, the engine core bleed line 410 further comprises a core bleed line PRV 417 configured to regulate a pressure of air in the engine core bleed line 410 (i.e., the second inlet flow of air) prior to mixing with air at the location upstream of the diversion line 480, for example to the air supply pressure threshold as described above.

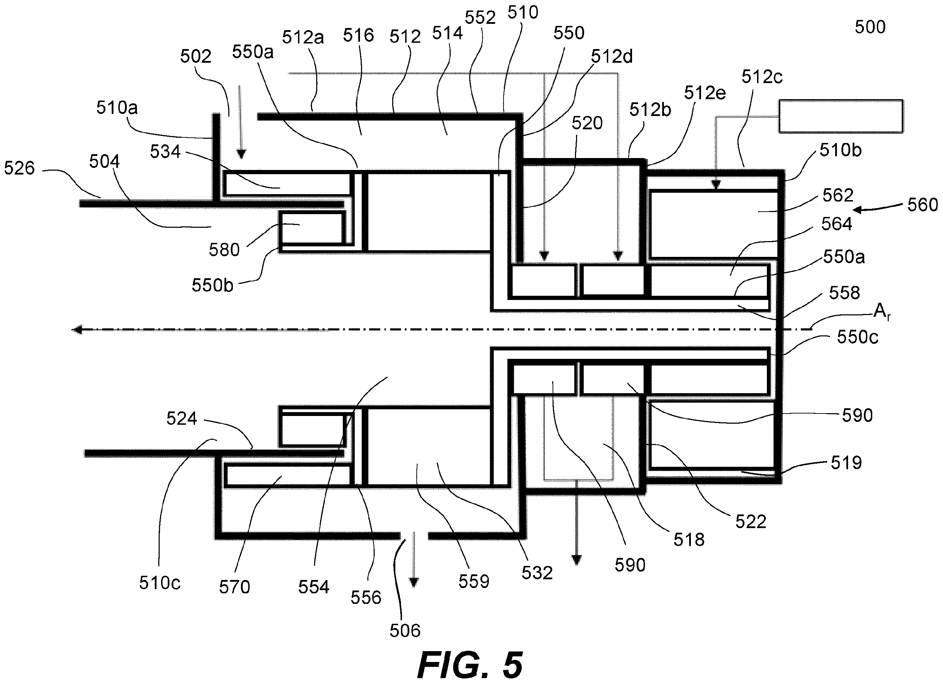

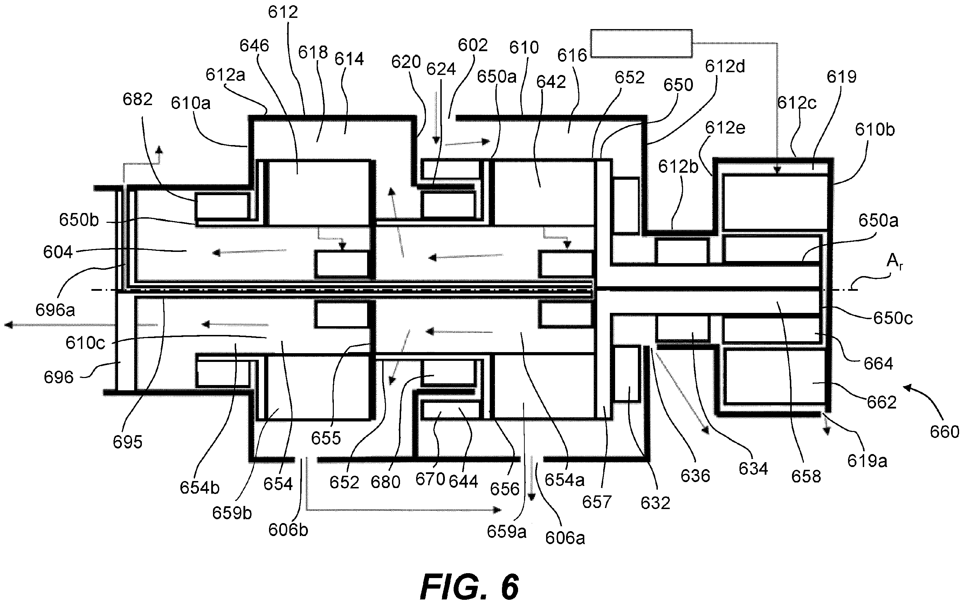

As noted above, the second inlet flow of gases may be more likely to include oil or oil mist than the first inlet flow of gases. When the air supplied by the air pressurisation system is used for cabin pressurisation, the presence of oil or oil mist within the second inlet flow of gases may lead to unpleasant smells within the cabin of the aircraft. In order to reduce the quantity of oil and oil mist, which may be present within the second inlet flow of gases, the air pressurisation system 401 further comprises an air/oil separator 500, 600 provided in, e.g. along, the core bleed line 410. As described in greater detail below with reference to Figures 5 and 6, the air/oil separator 500, 600 is configured to remove contaminating oil from the second inlet flow of gases before the second inlet flow of gases is provided to the delivery line 310.

The SOV 424 may be configured to prevent supply of compressed air to the airframe port 452 at an excessive pressure and/or an excessive temperature. To this end, the SOV 424 may be provided with means to monitor the pressure and/or the temperature of gases conveyed by the delivery line 310 and may be configured to close in response to a determination that the pressure of gases conveyed by the delivery line 310 exceeds an SOV pressure threshold (e.g., the air supply pressure threshold discussed above) and/or in response to a determination that the temperature of gases conveyed by the delivery line 310 exceeds a SOV temperature threshold (e.g., the upper airframe system air temperature threshold discussed above). Additionally or alternatively, the SOV 424 may be configured to close in response to receipt of a signal from a controller or a sensor indicative of the pressure and/or the temperature of gases within the delivery line 310 being excessive (e.g., exceeding the SOV pressure threshold and/or the SOV temperature threshold).

The air pressurisation system 401 may further comprise a heat exchanger 360 configured to transfer heat from the compressed air conveyed by the delivery line 310 to a coolant. In the specific arrangement shown in Figure 4, the heat exchanger 360 is located upstream of the air treatment apparatus 460, such that the heat exchanger 360 is configured to receive compressed air from the blower compressor 420 for heat exchange with the coolant and to discharge the compressed air to the airframe port via the air treatment apparatus 460 (i.e., via the delivery line 310) for supply to the airframe system 450. In other arrangements, the air pressurisation system 401 may not comprise the heat exchanger 360.

In the arrangement shown in Figure 4, the delivery line 310 comprises a cooling path 312 and a bypass path 314. The cooling path 312 extends through the heat exchanger 360 such that conditioned and compressed air which flows through the cooling path 312 passes through the heat exchanger 360 for heat exchange with the coolant, while the bypass path 314 bypasses the heat exchanger 360 such that compressed air which flows through the bypass path 314 does not pass through the heat exchanger 360. The cooling path 312 and the bypass path 314 may extend between an upstream junction 311 and a downstream junction 313 (the junctions being junctions of the respective paths). However, in other arrangements the bypass path 314 may be omitted.

The heat exchanger 360 has a compressed air side 362 which forms a portion of the delivery line 310 extending through the heat exchanger 360 (i.e., forms a portion of the cooling path 312). The heat exchanger 360 also has a coolant side 364 configured to receive a coolant for heat exchange with compressed air in the compressed air side 362. A coolant line 380 extends through the coolant side 364 of the heat exchanger 360 such that the heat exchanger 360 is configured to receive coolant via the coolant line 380.

The air pressurisation system 401 may further comprise a valve arrangement 370 configured to switch the air pressurisation system 401 between operation in a baseline mode and a cooling mode. In the arrangement of Figure 4, the valve arrangement 370 comprises a valve configured to control a flow rate of compressed air through the cooling path 312. According to the disclosure, such a valve may be disposed on the cooling path 312 or the bypass path 314 and may be disposed at either, or between, the upstream junction 311 and the downstream junction 313.

In the arrangements of Figure 4, a valve 374 is disposed on the bypass path 314 such that the valve 374 is configured to selectively restrict flow along the bypass path 314. The valve arrangement 370 is configured to actuate the valve 374 to vary a proportion of the compressed air which flows along the cooling path 312 (and therefore through the compressed air side 362 of the heat exchanger 360) and a corresponding proportion of the compressed air which flows along the bypass path 314. The valve 374 may be operable in at least an open state in which it permits flow along the bypass path 314 and a closed state in which it prevents flow along the bypass path 314. The valve 374 may be operable between a plurality of open states at which flow along the bypass path 314 is restricted to a varying degree. In other arrangements, in which the bypass path is omitted, the valve arrangement 370 may not comprise the valve 372 or the valve 374.

Further, it will be appreciated that in other arrangements, the valve arrangement 370 may not comprise the second valve 372. In particular, it may be that with any respective valve in a fully open state (or absent any such valve), a flow coefficient of the bypass path is greater than a flow coefficient of the cooling path, such that in use flow preferentially flows down the bypass path. Consequently, adequate control to divert flow between the bypass and cooling paths may be provided solely by a valve provided on the bypass path.

In the specific arrangement of Figure 4, the valve arrangement 370 comprises a coolant valve 376 disposed on the coolant line 380 and configured to control a flow rate of coolant through the coolant side 364 of the heat exchanger 360 by selectively restricting flow of coolant to the heat exchanger 360 via the coolant line 380. It will be understood that the coolant valve 376 may be disposed on either side of (i.e., upstream of or downstream of) the coolant side 364 of the heat exchanger. The coolant valve 376 is operable in at least an open state in which it permits flow to the coolant side 364 of the heat exchanger 360, and a closed state in which it prevents coolant flow to the coolant side 364 of the heat exchanger 360. In other arrangements, the coolant valve 376 may be omitted.

Generally, a coolant side of a heat exchanger as envisaged in the present disclosure may be configured to receive coolant comprising, for example, air, combustible fuel, oil, lubricant fluid, water, glycol, hydraulic fluid and/or refrigerant fluid. The coolant side 364 of the heat exchanger 360 in the example of Figure 4 is configured to receive coolant from the bypass duct 22 of the gas turbine engine 10 via the coolant line 380, such that air received from the bypass duct constitutes the coolant. As shown in the example of Figure 4, the heat exchanger 360 is be configured to discharge coolant to an external environment 4. In examples in which air received from the bypass duct 22 constitutes the coolant, the heat exchanger 360 may be configured to discharge coolant to the external environment 4 via the bypass duct 22 at a bypass duct outlet, the bypass duct outlet being located downstream of the bypass duct inlet within the bypass duct 22. In other examples, the heat exchanger 360 may be configured to discharge coolant to the external environment 4 elsewhere, for example at a core terminus outlet, the core terminus outlet being located at or in proximity to a core nozzle 20 of the gas turbine engine.

The air pressurisation system 401 may further comprise an aftercooling controller 390 configured to control the valve arrangement 370 to switch between operation of the air pressurisation system 401 in the baseline mode and the cooling mode.

**Figure** 5 is a schematic cross-sectional view of an air/oil separator 500 according to arrangements of the present disclosure. As described above, the air/oil separator 500 may be provided in the core bleed line 410 for separating oil and/or oil mist from the second inlet flow of gases to the air pressurisation system 401, e.g. prior to the second inlet flow of gases being provided to the delivery line 310.

The air/oil separator 500 may comprise a housing 510 and a rotor 550 supported for rotation within the housing about a rotor axis Aᵣ. In the arrangement depicted, the air/oil separator 500 is a centrifugal air/oil separator configured to separate oil and oil mist from the second inlet flow of gases by virtue of the rotation of the rotor 550 about the rotor axis Aᵣ.

The housing may comprise an outer wall 512 which extends about the rotor 550. The outer wall 512 may be spaced apart from an outer surface 550a of the rotor to create an annular housing space 514 between, e.g. radially between, the rotor 550 and the outer wall 512 of the housing.

The housing may comprise axial end walls 510a, 510b at either axial end of the outer wall 512 of the housing. As depicted, a diameter of the outer wall 512 may vary along the length of the housing. For example, the outer wall 512 may comprise two or more substantially cylindrical outer wall portions 512a, 512b, 512c having different outer diameters. The outer wall 512 may further comprise one or more radially extending portions 512d, 512e between the substantially cylindrical outer wall portions. However, in other arrangements, the outer wall 512 may have a substantially constant diameter along its axial length.

The housing 510 may comprise a first chamber 516, which may extend circumferentially about the rotor 550. In other words, the first chamber 516 may be an annular chamber formed about the rotor 550. The first chamber 516 may be part of the annular housing space 514. The first chamber 516 may extend, in a radial direction of the air/oil separator, between the outer surface 550a of the rotor and the outer wall 512 of the housing. The first chamber 516 may extend, in an axial direction of the air/oil separator, between a first axial end wall 510a of the housing and a first radially extending wall 520 of the housing. As depicted, the first radially extending wall 520 may extend, e.g. radially, from the outer wall 512 of the housing towards the rotor 550. The first chamber 516 may be formed by one of the cylindrical outer wall portions 512a of the outer wall of the air/oil separator, e.g. a portion of the wall of the air/oil separator that does not vary substantially in radius along its axial length, e.g. by any discrete changes in radius.

The air/oil separator 500 comprises an air/oil inlet 502 for receiving the second inlet flow of gases into the housing 510. The air/oil inlet 502 may be in fluidic communication with the first chamber 516. For example, the air/oil inlet 502 may be an inlet into the first chamber 516. The air/oil inlet 502 may be configured such that the second inlet flow of gases enters the housing 510, e.g. the first chamber 516, in a tangential direction of the air/oil separator relative to the rotor axis Aᵣ.

The housing 510 may further comprise a bearing chamber 518, which may extend circumferentially about the rotor 550. In other words, the bearing chamber 518 may be an annular chamber formed about the rotor 550. The bearing chamber 518 may be part of the annular housing space 514. The first chamber 516 and the bearing chamber 518 may be provided next to each other along the rotor axis Aᵣ, or may be spaced apart from one another along the rotor axis. As depicted in Figure 5, the first chamber and the bearing chamber may be separated by the first radially extending wall 520 of the housing. The bearing chamber 518 may extend, in the axial direction of the housing, between the first radially extending wall 520 and a second radially extending wall 522 or the second axial end wall 510b of the housing. Flow of gases between the first chamber 516 and the bearing chamber 518 may be restricted, e.g. by the first radially extending wall 520. In some arrangements, the first chamber 516 and the bearing chamber 518 may be fluidically isolated from one another. Alternatively, flow of gases between the first chamber 516 and the bearing chamber 518 may be enabled by one or more openings formed in the first radially extending wall 520 or between the first radially extending wall 520 and the rotor 550.

The air/oil separator 500 may comprise one or more bearings 590 extending about the rotor 550 for supporting rotation of the rotor 550 relative to the housing 510. The bearings 590 may be provided at least partially within the bearing chamber 518.

In the arrangement depicted in Figure 5, the bearings 590 comprise air bearings, such as aerostatic or aerodynamic bearings. In particular, the air/oil separator 500 shown in Figure 5 comprises two air bearings provided along the rotor in the bearing chamber 518. One of the air bearings may be coupled to the first radially extending wall 520 of the housing and another of the air bearings may be coupled to the second radially extending wall 522. The air bearings 590 may receive a flow of air from the engine core bleed line 410 in order to operate to support rotation of the rotor 550 within the housing 510. Accordingly, the air bearings may operate to support rotation of the shaft when the core bleed control valve 414 is open. In some arrangements, the air/oil separator may comprise passive magnetic bearings or resilient elements, such as foil springs, for restraining/guiding the rotor when air is not supplied to the air bearings, e.g. to prevent metal to metal contact of the bearings and rotor when the core bleed control valve 414 is not open. The air that has passed through the air bearings may be exhausted from the bearing chamber 518. For example, the air that is exhausted from the air bearings may be delivered to the bypass duct 22.

The housing 510 may further comprise a motor chamber 519, which may extend circumferentially about the rotor 550. In other words, the motor chamber 519 may be an annular chamber formed about the rotor 550. The motor chamber 519 may be part of the annular housing space 514. The motor chamber 519 may extend, in a radial direction of the air/oil separator, between the outer surface 550a of the rotor and the outer wall 512 of the housing. The motor chamber 519 may be provided on an opposite side of the bearing chamber 518 from the first chamber 516. The motor chamber 519 may extend, in an axial direction of the air/oil separator, between a second axial end wall 510b (opposite the first axial end wall 510a) of the housing and the second radially extending wall 522 of the housing. Flow of gases between the first chamber 516 and the bearing chamber 518, and the motor chamber 519 may be restricted, e.g. by the second radially extending wall 522. In some arrangements, the first chamber and the bearing chamber 516, 518 may be fluidically isolated from the motor chamber 519. Alternatively, a flow of gases may be permitted between the first chamber, the bearing chamber and the motor chamber, e.g. through openings formed in the first and second radially extending walls or between the first and second radial walls and the rotor.

The air/oil separator 500 may comprise a motor/generator 560 configured to selectively drive rotation of the rotor 550 relative to the housing 510. For example, a stator 562 of the motor/generator may be coupled to the housing 510 and a rotor 564 of the motor/generator may be coupled to the rotor. As depicted, the motor/generator 560 may be provided at least partially or completely within the motor chamber 519. The operation of the motor 560 may be controlled, as described in greater detail below, by a controller of the air pressurisation system 401, such as the controller 390, 490, or a controller of the gas turbine engine 10, such as an engine electronic controller.

The housing 510 further comprises air outlet 504 of the air/oil separator 500 for air, from which oil has been separated, to leave the air/oil separator, e.g. to be provided to the delivery line 310. As depicted, the housing 510 may comprise an outlet opening 510c formed in the first axial end wall 510a of the housing. The outlet opening 510c may be substantially circular and may be formed centrally on the first axial end wall 510a of the housing. For example, a centreline of the outlet opening 510c may be aligned with the rotor axis Aᵣ. In some arrangements, the housing 510 may comprise a tubular duct portion 526 extending from the axial end wall 510a. The tubular duct portion 526 may extend from the axial end wall 510a in a direction away from the annular housing space 514. The tubular duct portion 526 may be provided about the outlet opening 510c. Air leaving the air/oil separator via the air outlet 504 may pass though the tubular duct portion 526.

The rotor 550 has first and second axial ends 550b, 550c. The first and second axial ends may be arranged between the axial end walls 51 0a, 510b of the housing 510, such that the rotor is contained inside of the housing.

As illustrated, the rotor 550 may be tubular and may comprise a tube wall 552 and an interior space 554, e.g. within the hollow interior of the rotor tube. The axial ends 550b, 550c of the rotor may be open. In other words, the rotor may not comprise axial end walls. Further, as depicted, a diameter of the rotor 550 may vary along the length of the rotor. In particular, the rotor may comprise a first rotor portion 556 comprising a tube wall having a first diameter and a second rotor portion 558 comprising a tube wall having a second diameter different from the first diameter. For example, the first diameter may be greater than the second diameter. As depicted, the first rotor portion 556 may be at least partially aligned, e.g. axially aligned, with the first chamber 516 and the second rotor portion 558 may be at least partially aligned, e.g. axially aligned, with the bearing chamber 518 and/or the motor chamber 519. Accordingly, the one or more air bearings 590 may be coupled to the second rotor portion 558. Additionally or alternatively, the rotor 564 of the motor may be coupled to the second portion 558.

The air outlet 504 of the air/oil separator may be in fluidic communication with the interior space 554 of the rotor 550.

The air/oil separator 500 may comprise a first channel 532 for gases to pass from the air/oil inlet 502 to the air outlet 504. The first channel 532 may extend from the first chamber 516 to the interior space 554 of the rotor. As depicted, the first channel 532 may extend through the tube wall 552 of the rotor. The first channel 532 may extend through the tube wall of the first rotor portion 556.

The air/oil separator 500 may comprise a filter 559, such as volume of metal foam, provided at least partially within the first channel 532. As depicted, the filter 559 may be coupled to the rotor 550. For example, the filter may be provided within one or more openings in the rotor tube wall forming the first channel 532. In such arrangements, the filter, e.g. the volume of metal foam, may form a replaceable cartridge supported by the rotor. Alternatively, a portion, e.g. length, of the rotor may be formed by the filter.

When the second inlet flow of gases passes through the first channel 532, oil entrained within the second inlet flow of gases may be trapped within, or restricted from passing through, the filter 559, whilst air may pass through the filter to the interior space 554 of the rotor. Oil trapped within the filter may be urged outward due to the rotation of the rotor 550 and may return to the first chamber 516.

In use of the air/oil separator 500, the air/oil separator may be arranged such that the rotor axis Aᵣ is substantially horizontal or is aligned with a direction having a component in a horizontal direction. Oil within the first chamber 516, e.g. which has been urged outward into the first chamber 516 from the filter 559, may flow downward to a lowest point in the first chamber 516. The air/oil separator further comprises an oil outlet 506. The oil outlet 506 may be formed in the outer wall 512 of the housing. In particular, the oil outlet may be formed out of the first chamber 516 and may be formed at the lowest point of the first chamber when the air/oil separator is in use. Oil that has been separated from the second inlet flow of gases may thereby flow towards the oil outlet 506 due to gravity. Oil leaving the air/oil separator 500 via the oil outlet 506 may be exhausted from the aircraft, e.g. via the bypass duct 22, or may be delivered to a main oil breather 495 of the gas turbine engine (illustrated in Figure 4).

The air/oil separator 500 may further comprise a second channel 534 for gases to pass from the air/oil inlet towards the air outlet. As depicted, the second channel 534 may extend from the first chamber 516 around the first axial end 550b of the rotor to the air outlet 504. In other arrangements, the second channel 234 may extend though one or more openings formed the tube wall 552 of the rotor, e.g. through the tube wall of the first rotor portion.

The air/oil separator 500 may further comprise one or more vanes 570 having aerodynamic surfaces. The vanes 570 are coupled to, or integrally formed with, the rotor 550 and the air/oil separator is configured such that at least a portion of the second inlet flow of gases entering the housing is directed to flow over the aerodynamic surfaces of the vanes 570. For example, the portion of the second inlet flow of gases may be directed to flow over the aerodynamic surfaces in a radial direction, and optionally the tangential direction of the air/oil separator. The vanes 570, e.g. the aerodynamic surfaces, may be configured, e.g. shaped, such that the portion of the second inlet flow of gases passing over the vanes acts to drive rotation of the rotor 550. As depicted, the vanes 570 may be arranged at least partially within the second channel 534. Accordingly, gases passing through the second channel 534 may flow over the aerodynamic surfaces of the vanes 570. As depicted, the vanes 570 may extend beyond the first axial end 550b of the rotor or, when the vanes form part of the rotor 550, the vanes may form the first axial end 550b of the rotor.

The air/oil separator 500 may further comprise a seal 580 configured to restrict a flow rate of gases through the second channel 534. The seal 580 may be arranged in a series arrangement with the vanes 570 along the second channel. The seal 580 may be configured to create a tortuous path for gases to pass though the seal 580. For example, the seal 580 may comprise a labyrinth seal. The seal 580 may thereby be configured to limit the flow rate of gases able to pass between the air/oil inlet 502 and the air outlet 504 bypassing the filter 559.

The housing 510 may further comprise a tubular inner wall 524 arranged radially inside of the outer wall 512. The tubular inner wall 524 may extend in an axial direction of the housing from the first axial end wall 510a towards the second axial end wall 510b. The tubular inner wall 524 may extend about at least a part of the rotor 550. The seal 580 may be arranged between, e.g. radially between, the tubular inner wall 524 and the rotor. As depicted, the tubular inner wall 524 may be provided between, e.g. radially between, the seal 580 and the vanes 570. Hence, gases passing through the vanes 570 may flow around at least part of the tubular inner wall 524 to the seal 580. In other words, at least part of the second channel 534 may for formed by the tubular inner wall 524 of the housing.

In some arrangements, the air/oil separator may comprise a catalyst material provided between the air/oil inlet 502 and the air outlet 504, e.g. within the first and/or second channels 532, 534, and/or within the interior space 554 of the rotor. For example, the catalyst material may be provided on one or more exterior (wetted) surfaces of the filter 559 in contact with the gases passing through the filter. Additionally or alternatively, the catalyst material may be provided on one or more surfaces of the housing 510 or rotor 550 forming the first and/or second channels 532, 534. The catalyst material may be configured to catalyse a reaction, e.g. an oxidation reaction, of volatile organic compounds (e.g. hydrocarbons) within the second inlet flow of gases within the air/oil separator.

As rotation of the rotor 550 may be driven by the portion of the second inlet flow of gases flowing around/through the vanes 570, the rotor 550 may be driven to rotate when the core bleed control valve 414 is open, e.g. when the second inlet flow of gases is passing through the air/oil separator. The rate at which the rotor 550 is driven to rotate by virtue of the portion of the second inlet flow of gases flowing around/through the vanes 570 may vary depending on a flow rate and pressure of the second inlet flow of gases. Further, performance of the air/oil separator 500 in separating oil from the second inlet flow of gases may vary depending on the rate of rotation of the rotor 550. Accordingly, the motor/generator 560 may be operated, in a driving mode, to rotate the rotor, e.g. to supplement the drive torque provided by vanes 570, depending on the rate of rotation of the rotor, or the pressure and/or flow rate of the second inlet flow of gases, so that the rotor 550 rotates at a desired rate of rotation or within a desired range of rates of rotation. In this way, the air/oil separator may operate with a desired efficacy to remove oil and oil mist from the second inlet flow of gases.

In some arrangements and operating conditions, the portion of the second inlet flow of gases flowing around/through the vanes 570 may cause the rotor to rotate at a rate of rotation greater than a desired rate of rotation. In such situations, the motor/generator 560 may be operated, in a driven mode, as a generator to generate electricity and thereby reduce the rate of rotation of the rotor 550.

A controller of the gas turbine engine, such as an engine electronic controller, a controller of the air pressurisation system 401, such as the air supply mode controller 490, or a dedicated controller may control the operation of the motor/generator 560 based on the rate of rotation of the rotor, and/or the pressure and/or flow rate of the second inlet flow of gases so that the rotor 550 is driven to rotate at a desired speed. The controller may control the operation of the motor/generator 560, e.g. to operate in the driving or driven modes, to maintain the rate of rotation of the rotor within a desired range of rates of rotation. The controller may control the operation of the motor 560 when the core bleed control valve 414 is open.

With reference to **Figure 6** an air/oil separator 600 according to another arrangement will now be described. The air/oil separator 600 may be similar to the air/oil separator 500 described above with reference to Figure 5 and features described in relation to the air/oil separator 500 may apply equally to the air/oil separator 600. The air/oil separator 600 may be provided within the air pressurisation system 401, e.g. in place of the air/oil separator 500.

The air/oil separator 600 may differ principally from the air/oil separator in that the air/oil separator 600 comprises two stages of oil separation compared to the single stage of oil separation performed by the air/oil separator 500 described above.

The air/oil separator 600 comprises a housing 610 and a rotor 650 supported for rotation within the housing about a rotor axis Aᵣ. The air/oil separator 600 is a centrifugal air/oil separator configured to separate oil and oil mist from the second inlet flow of gases by virtue of the rotation of the rotor 650 about the rotor axis Aᵣ.

The housing may comprise an outer wall 612 which extends about the rotor 650. The outer wall 612 may be spaced apart from an outer surface 650a of the rotor to create an annular housing space 614 between, e.g. radially between, the rotor 650 and the outer wall 612 of the housing.

The housing 610 may comprise axial end walls 610a, 610b at either axial end of the outer wall 612 of the housing. As depicted, a diameter of the outer wall 612 may vary along the length of the housing. For example, the outer wall 612 may comprise two or more substantially cylindrical outer wall portions 612a, 612b, 612c having different outer diameters. The outer wall 612 may further comprise one or more radially extending portions 612d, 612e between the substantially cylindrical outer wall portions. In other arrangements, the outer wall 612 may have a substantially constant diameter along its axial length. The housing 610 may further comprises a first radially extending wall 620, which extends inwardly from the outer wall 612, e.g. towards the rotor 650.

The housing 610 may comprise a first chamber 616 and a second chamber 618, which extend circumferentially about the rotor 650. In other words, the first and second chambers are annular chambers formed about the rotor 650. The first and second chambers 616, 618 may be part of the annular housing space 614. The first and second chambers 616, 618 may extend, in a radial direction of the air/oil separator, between the outer surface 650a of the rotor and the outer wall 612 of the housing.

The second chamber 618 may extend, in an axial direction of the air/oil separator, between the first axial end wall 610a of the housing and the first radially extending wall 620 of the housing. The first chamber 616 may extend, in an axial direction of the air/oil separator, from the first radially extending wall 620 of the housing towards the second axial end wall 610b of the housing. In other words, the first chamber 616 may be on the opposite side of the first radially extending wall 620 from the second chamber 618. In the arrangement illustrated, the first chamber 616 extends from the first radially extending wall 620 to a first radially extending portion 612d of the outer wall 612 of the housing. However in other arrangements, the first chamber 616 may extend from the first radially extending wall 620 to a second radially extending wall of the housing, or to the second axial end wall 610b of the outer housing.

The first and second chambers 616, 618 may be formed by one or more, e.g. respective ones of, the cylindrical outer wall portions 612a of the outer wall of the air/oil separator, e.g. a portion of the wall of the air/oil separator that does not vary substantially in radius along its axial length, e.g. by any discrete changes in radius.

The air/oil separator 600 comprises an air/oil inlet 602 for receiving the second inlet flow of gases into the housing 610. The air/oil inlet 602 may be in fluidic communication with the first chamber 616. For example, the air/oil inlet 602 may be an inlet into the first chamber 616. The air/oil inlet 602 may be configured such that the second inlet flow of gases enters the housing 610, e.g. the first chamber 516, in a tangential direction of the air/oil separator relative to the rotor axis Aᵣ.

The housing 610 may further comprise a motor chamber 619, which may extend circumferentially about the rotor 650. In other words, the motor chamber 619 may be an annular chamber formed about the rotor 650. The motor chamber 619 may be part of the annular housing space 614. The motor chamber 619 may extend, in a radial direction of the air/oil separator, between the outer surface 650a of the rotor and the outer wall 612 of the housing. The motor chamber 619 may be provided on an opposite side of the first chamber 616 to the second chamber 618 In the arrangement illustrated, the motor chamber 519 extends, in an axial direction of the air/oil separator, between the second axial end wall 510b of the housing and a second radially extending portion 610e of the housing. However in other arrangements, the motor chamber 619 may extend between the second axial end wall 610b of the housing and a radially extending wall of the housing, such as the second radially extending wall. For example, the motor chamber 619 may be arranged on the opposite side of the second radially extending wall from the first chamber 616.

Flow of gases between the first and/or second chambers 616, 618, and the motor chamber 619 may be restricted or controlled. As illustrated, the air/oil separator 600 may comprise a first motor chamber seal 632 for restricting the flow of gases between the first chamber 616 and the motor chamber 619. The first motor chamber seal 632 may be configured to create a tortuous path for gases to pass between the first chamber and the motor chamber. For example, the first motor chamber seal 632 may be a labyrinth seal. As depicted, the first motor chamber seal 632 may be arranged between, e.g. axially between, the rotor 650, e.g. a radially extending surface of the rotor, and the outer wall of the housing, e.g. a radially extending portion of the outer wall, such as the first radially extending portion 612d. Accordingly, the first motor chamber seal 632 may be arranged such that a clearance between rotating and static components of the first motor chamber seal 632 is in an axial direction of the air/oil separator.

The air/oil separator 600 may further comprise a second motor chamber seal 634 for restricting the flow of gases between the first chamber 616 and the motor chamber 619. The second motor chamber seal 634 may be provided in a series arrangement with the first motor chamber seal 632 between the first chamber 616 and the motor chamber 619.The second motor chamber seal 634 may be configured to create a tortuous path for gases to pass between the first chamber and the motor chamber. For example, the second motor chamber seal 634 may be a labyrinth seal. As depicted, the second motor chamber seal 634 may be arranged between, e.g. radially between, the rotor 650, e.g. the second portion of the rotor, and the outer wall of the housing, e.g. one of the cylindrical outer wall portions, such as the second cylindrical outer wall portion 612b. Accordingly, the second motor chamber seal 634 may be arranged such that a clearance between rotating and static components of the second motor chamber seal 634 is in an radial direction of the air/oil separator. In other arrangements, the first and second motor chamber seals may be arranged between different portions of the rotor and housing. In some arrangements, one or both of the first and second motor chamber seals may be omitted.

As depicted, the housing 610 may comprise an inter-seal opening 636, for gases to leave the housing 610 between the first and second motor chamber seals 632, 634. Gases leaving the housing via the inter-seal opening may be delivered to the bypass duct 22 or the main engine oil breather 495, or otherwise exhausted from the air pressurisation system 401.

The air/oil separator 600 may comprise a motor/generator 660 configured to selectively drive rotation of the rotor 650 relative to the housing 610. For example, a stator 662 of the motor/generator may be coupled to the housing 610 and a rotor 664 of the motor/generator may be coupled to the rotor. As depicted, the motor/generator 660 may be provided at least partially or completely within the motor chamber 619. The operation of the motor/generator 660 may be controlled, e.g. in driving and driven modes of the motor/generator 660, in the same manner as the motor/generator 560 described above.

The air/oil separator 600 may comprise a motor chamber opening 619a for gases, e.g. which have passed through the first and second motor chamber seals 632, 634, to leave the motor chamber of the housing. Gases leaving the housing via the motor chamber opening 619a may be delivered to the bypass duct 22, the main engine oil breather 495, a ventilation system of the gas turbine engine or may otherwise be exhausted from the air pressurisation system 400.

The rotor 650 has first and second axial ends 650b, 650c. The first and second axial ends may be arranged between the axial end walls 61 0a, 610b of the housing 610, such that the rotor is contained inside of the housing. Alternatively, as depicted in Figure 6, the rotor 650 may protrude out of the interior of the housing 610, beyond the first axial end 610a to the first axial end 650b, so that part of the rotor is arranged inside of the tubular duct portion 626, as described below.

As illustrated, the rotor 650 is tubular and comprises a tube wall 652 and a hollow interior space 654. As illustrated, the rotor may comprise first and second interior space portions 654a, 654b, which may be separated from one another by a radially extending wall 655 of the rotor. The radially extending wall 655 may extend from the tube wall 652 towards to rotor axis A_{R} to separate the first and second interior space portions. 654a, 654b. Flow of gases between the first and second interior space portions through the radially extending wall 655 may be prevented.

A diameter of the rotor 650 may vary along the length of the rotor. In particular, the rotor may comprise a first portion 656 comprising a tube wall having a first diameter and a second portion 658 having a tube wall having a second diameter different from the first diameter. For example, the first diameter may be greater than the second diameter. The rotor may comprise a radially extending portion 657 joining the first and second portion. As depicted, the first and second interior space portions 654a, 654b may be formed inside the first portion 656. Further, the first portion 656 may be at least partially aligned, e.g. axially aligned, with the first and second chambers 616, 618 and the second rotor portion 658 may be at least partially aligned, e.g. axially aligned, with motor chamber 619. Accordingly, the rotor 664 of the motor 660 may be coupled to the second portion 658.

The housing 610 further comprises air outlet 604 of the air/oil separator 600 for air, from which the oil has been separated, to leave the air/oil separator, e.g. to be provided to the delivery line 310. As depicted, the housing 610 may comprise an outlet opening 610c formed in the first axial end wall 610a of the housing. The outlet opening 610c may be substantially circular and may be formed centrally on the axial end wall of the housing 610. For example, a centreline of the outlet opening 610c may be aligned with the rotor axis Aᵣ. In some arrangements, the housing 610 may comprise a tubular duct portion 626 extending from the axial end wall 610a. The tubular duct portion 626 may extend from the axial end wall 610a in a direction away from the annular housing space 614. The tubular duct portion may be provided about the outlet opening 610c. Air leaving the air/oil separator via the air outlet 604 may pass though the tubular duct portion 626.

The first axial end 650b of the rotor may be open into the second interior space portion 654b. The air outlet 504 of the air/oil separator may be in fluidic communication with the second interior space portion 654b of the rotor 550.

The air/oil separator 600 may comprise a first channel 642 for gases to pass from the air/oil inlet 602 towards the air outlet 604. The first channel 642 may extend from the first chamber 616 to the interior space of the rotor, e.g. the first interior space portion 654a. As depicted, the first channel 642 may extend through the tube wall 652 of the rotor. The first portion of the interior space 654a may be in fluidic communication with the second chamber 618. Hence, gases which have passed through the first channel 642 into the first portion of the interior space 654a may flow into the second chamber, e.g. through one or more openings provided in the tube wall of the rotor between the first portion of the interior space 654a and the second chamber 618.

The air/oil separator 600 may comprise a first filter 659a, e.g. a first volume metal foam, provided at least partially within the first channel 642. As depicted, the first filter 659a may be coupled to the rotor 650. For example, the first filter 659a may be provided within one or more openings in the rotor tube wall 652 forming the first channel 642. Alternatively, a portion, e.g. a length, of the rotor may be formed by the first filter 659a.

When the second inlet flow of gases passes through the first channel 642, oil and oil mist within the second inlet flow of gases may be trapped, or restricted from flowing through the first channel by the first filter 659a, whilst air may pass through the filter to the interior space of the rotor, e.g. the first portion of the interior space 652b. Oil trapped within the first filter may be urged outward due to the rotation of the rotor 650 and may return to the first chamber 616.

In use of the air/oil separator 600, the air/oil separator may be arranged such that the rotor axis Aᵣ is substantially horizontal or is aligned with a direction having a component in a horizontal direction. Oil within the first chamber 616, e.g. which has been urged outward into the first chamber 616 from the first filter, may flow downward to a lowest point in the first chamber 616. The air/oil separator may further comprise a first oil outlet 606a. The first oil outlet may be formed in the outer wall 612 of the housing. In particular, the oil outlet may be formed out of the first chamber 616 and may be formed at the lowest point of the first chamber when the air/oil separator is in use. Oil that has be separated from the second inlet flow of gases may thereby flow towards the first oil outlet 606a due to gravity. Oil leaving the air/oil separator 600 via the first oil outlet 606a may be exhausted from the aircraft, e.g. via the bypass duct 22, or may be delivered to a main oil breather 495 of the gas turbine engine (illustrated in Figure 4).

The air/oil separator 600 may further comprise one or more vanes 670 having aerodynamic surfaces. The vanes 670 may be coupled to, or integrally formed with, the rotor 650, and the air/oil separator may be configured such that at least a portion of the second inlet flow of gases entering the housing is directed to flow over the aerodynamic surfaces of the vanes 670. For example, the portion of the second inlet flow of gases may be directed to flow over the aerodynamic surfaces in a radial direction, and optionally the tangential direction of the air/oil separator. The vanes 670, e.g. the aerodynamic surfaces, may be configured, e.g. shaped, such that the portion of the second inlet flow of gases passing over the vanes acts to drive rotation of the rotor 650.

The air/oil separator 600 may further comprise a second channel 644 for gases to pass from the air/oil inlet 602 towards the air outlet 604. As depicted, the second channel 644 may extend from the first chamber 616 towards the air outlet 604. In particular, the second channels 644 may extend from the first chamber 616 through the vanes 670 to the second chamber 618. Accordingly, flow through the second channel 644 may drive rotation of the rotor 650.

The air/oil separator 600 may further comprise a seal 680 configured to restrict a flow rate of gases through the second channel 644. The seal 680 may be configured to create a tortuous path for gases to pass though the seal 680. For example, the seal 680 may comprise a labyrinth seal. The seal 680 may thereby be configured to limit the flow rate of gases able to pass between the air/oil inlet 602 and the air outlet 604 bypassing the first filter 659a.

The housing 610 may further comprise a tubular inner wall 624 arranged radially inside of the outer wall 612. The tubular inner wall 624 may extend in an axial direction of the housing from the first radially extending wall 620 towards the second axial end wall 610b. The tubular inner wall 624 may extend about at least a part of the rotor 650. The seal 680 may be arranged between, e.g. radially between, the tubular inner wall 624 and the tube wall 652 of the rotor. As depicted, the tubular inner wall 624 may be provided between, e.g. radially between, the seal 680 and the vanes 670. Hence, gases passing through the vanes 670 may flow around at least part of the tubular inner wall 624 to the seal 680. In other words, at least part of the second channel 644 may for formed by the tubular inner wall 624.

The air/oil separator may further comprise a third channel 646 extending from the second chamber 618 towards the air outlet 604. In particular, the third channel 646 may extend from the second chamber 618 to the second portion 654b of the interior space of the rotor. As depicted, the third channel 646 may extend through the tube wall 652 of the rotor.

The air/oil separator 600 may further comprise a second filter 659b, e.g. a second volume metal foam, provided at least partially within the third channel 646. As depicted, the second filter 659b may be coupled to the rotor 650. For example, the second filter 659b may be provided within one or more openings in the rotor tube wall 652 forming the third channel 646. Alternatively, a portion, e.g. a length, of the rotor 650 may be formed by the second filter 659b. When the second inlet flow of gases passes through the third channel 646, oil and oil mist within the second inlet flow of gases, e.g. which has passed through the first or second channel 644, 646, may be trapped, or restricted from passing through the third channel, by the second filter 659b, whilst the air may pass through the second filter to the interior space of the rotor, e.g. the second portion of the interior space 654b. Oil trapped within the second filter may be urged outward due to the rotation of the rotor 650 and may return to the second chamber 618.

Oil within the second chamber 618, e.g. which has been urged outward into the second chamber 618 from the second filter, may flow downwards to a lowest point in the second chamber 618. The air/oil separator further comprises a second oil outlet 606b. The second oil outlet may be formed in the outer wall 612 of the housing. In particular, the second oil outlet may be formed out of the second chamber 618 and may be formed at the lowest point of the second chamber when the air/oil separator is in use. Oil that has been separated from the second inlet flow of gases at the second filter 659b may thereby flow towards the second oil outlet 506b due to gravity. Oil leaving the air/oil separator 500 via the second oil outlet 506b may be exhausted from the aircraft, e.g. via the bypass duct 22, or may be delivered to a main oil breather 495 of the gas turbine engine (illustrated in Figure 4).

The air/oil separator 600 may further comprise an end seal 682 configured to prevent or restrict gases from flowing from the second chamber 618 to the air outlet 604 around the first axial end 650b of the rotor, thereby bypassing the third channel 646. The end seal 382 may be configured to create a tortuous path for gases to flow between the second chamber 618 and the air outlet 604. For example, the end seal 682 may comprise a labyrinth seal. When the rotor protrudes beyond the first axial end 610a of the housing into the tubular duct portion 626 of the housing, the end seal 682 may be provided between the rotor and the tubular duct portion 626 of the housing. Otherwise, the end seal 682 may be provided between the rotor and the outer wall of the housing.

In some arrangements, the air/oil separator 600 may comprise a catalyst material provided between the air/oil inlet and the air outlet, e.g. within the first, second and/or third channels 642, 644, 646 and/or within the interior space 654 of the rotor. For example, catalyst the material may be provided on one or more exterior (wetted) surfaces of the filter 659a and/or the second filter 659b. Additionally or alternatively, the catalyst material may be provided on one or more surfaces of the housing 610 and/or rotor 650 forming the first, second and/or third channels 642, 644, 646. The catalyst material may be configured to catalyse a reaction, e.g. an oxidation reaction, of volatile organic compounds (e.g. hydrocarbons) within the second inlet flow of gases within the air/oil separator.

Materials suitable for use as the catalyst material in the air/oil separator 500, 600 in accordance with the purposes described above will be apparent to those skilled in the art. For example, the catalyst material may include copper (e.g., copper oxide), vanadium (e.g., vanadium oxide), platinum, palladium, rhodium, cerium, iron, manganese and/or nickel.

The air/oil separator 600 may comprise one or more bearings 690 for supporting rotation of the rotor 650 relative to the housing 610. The bearings may comprise air bearings, such as aerostatic or aerodynamic bearings, e.g. aerostatic carbon bearings. As depicted in Figure 6, the bearings 690 may be provided within the hollow interior of the rotor. In particular, one of the bearings 690 may be provided in the first portion of the interior space 654a and another of the bearings 690 may be provided in the second portion of the interior space 654b. One or more of the bearings 690 may be coupled to the radially extending wall of the rotor 655. For example, the one of the bearings provided in the second portion of the interior space of the rotor may be coupled to the radially extending wall 655 of the rotor. Additionally or alternatively, one or more of the bearings may be coupled to the second portion 658 of the rotor, or to the radially extending portion 657 of the rotor joining the first and second portions of the rotor 650.

As depicted, the air/oil separator 600 may comprise a stationary shaft 695. The stationary shaft 695 may be substantially cylindrical and may extend through the hollow interior of the rotor 650. A centreline of the stationary shaft 695 may be aligned with the rotor axis Aᵣ of the air/oil separator. The stationary shaft 695 may be coupled to the housing 610 and the bearings 690 may be coupled to the stationary shaft, in order to support rotation of the rotor 650 relative to the housing. The stationary shaft 695 may extend though interior bores of the bearings 690.

As depicted, the stationary shaft 695 may extend into the interior space of the shaft though the opening 610c in the first axial end wall 610a. Additionally, the stationary shaft 695 may extend through the radially extending wall 655 of the rotor between the first and second portions of the interior space of the rotor.

The stationary shaft 695 may be coupled to the housing by a plurality of radially extending struts 696. For example, the struts 696 may be coupled to the tubular duct portion 626 of the housing.

The air bearings 690 may receive a flow of air from the engine core bleed line 410 in order to operate to support rotation of the rotor 650 within the housing 610. In particular, the air bearings may be arranged to receive a flow of air which has passed into the interior space of the rotor through the first channel, second channel and/or the third channel. The air bearings 690 may thereby receive air from which oil has been separated by the first and or second filters. The stationary shaft 695 may be hollow and the air that has been delivered the air bearings 690 may be exhausted through the hollow interior 695a of the stationary shaft. Additionally, one or more of the struts 696 may be hollow or comprise a duct 696a passing therethrough for the exhausted air from the air bearings to leave the housing 610 via the struts. The air that is exhausted from the air bearings may be delivered to the bypass duct 22.

Although in the arrangements described above, the air/oil separator 500, 600 is provided in the core bleed line 410 of the air pressurisation system 401 that also comprises a blower compressor 420, it is also contemplated that the air/oil separator 500, 600 may be provided in a core bleed line of an air pressurisation system 401 that does not comprise a blower compressor 420, e.g. in which the inlet flow of gases is provided, e.g. exclusively provided, by the core bleed line.

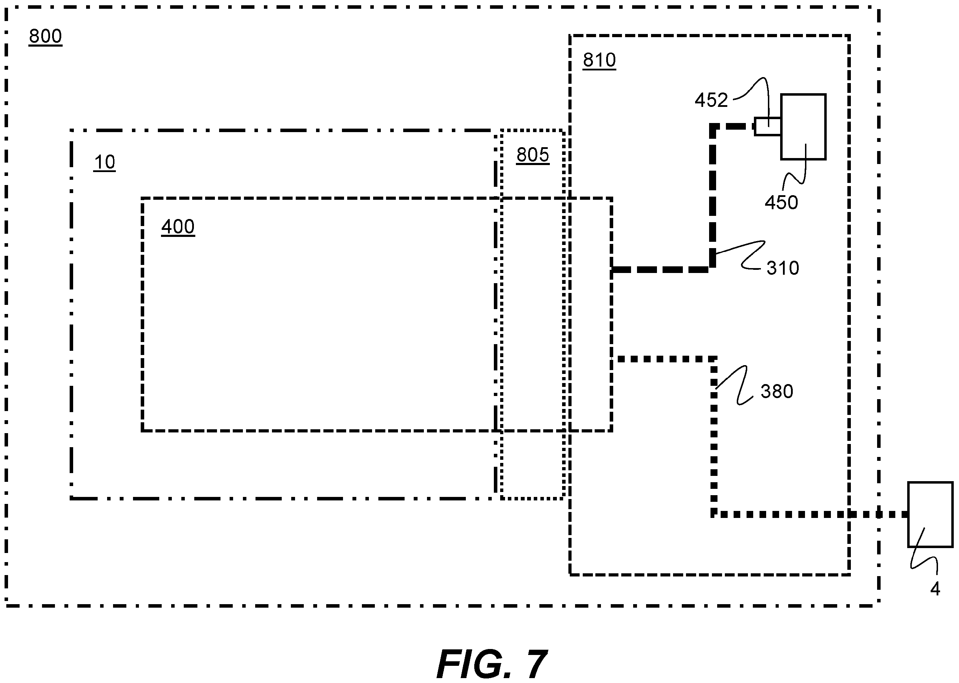

**Figure 7** shows a schematic view of an aircraft 800 which includes an airframe 810, a gas turbine engine 10, a pylon 805 and an air pressurisation system 400. The pylon 805 is configured to attach the gas turbine engine 10 to the airframe 810 (e.g., to a wing of the airframe 810), as will be appreciated by those of ordinary skill in the art. The gas turbine engine 10 may be in accordance with the gas turbine engine 10 described above with reference to Figures 1 to 3. The air pressurisation system 400 may have any suitable combination of the features described above with respect to the air pressurisation system 401. The air pressurisation system 400 may be at least partially disposed within the gas turbine engine 10, at least partially disposed within the pylon 805 and/or at least partially disposed within the airframe 810. For instance, the blower compressor 420 may be disposed within the gas turbine engine 10 whereas the air treatment apparatus 460 (if present) may be disposed within the airframe 810. The airframe 810 comprises the airframe system 450 to which the airframe port 452 is configured to supply conditioned and compressed (i.e., pressurised) air from the air pressurisation system 400. The heat exchanger 360 may be disposed within the gas turbine engine 10 or within the pylon 805. In some examples, the blower compressor SOV 424 may be located at or upstream of a boundary between the gas turbine engine 10 and the airframe 810 or located at or upstream of a boundary between the pylon 805 and the airframe 810 to prevent supply of compressed air to the airframe 810 at an excessive pressure and/or an excessive temperature. Accordingly, the blower compressor SOV 424 may protect an airframe ducting system (e.g. a wing ducting system) from compressed air being supplied at an excessive pressure and/or an excessive temperature.

This disclosure contemplates that the functions described with respect to each of the aftercooling controller 390 and the air supply mode controller 490, if both are present, may be achieved by a single (e.g., unified) air pressurisation system controller. Further, it will be appreciated that any of the aftercooling controller 390, the air supply mode controller 490 and/or the single air pressurisation system controller as referred to herein may be or form a part of a multifunctional controller configured to control multiple systems of the gas turbine engine 10, which may be referred to in the art as an electronic engine controller (EEC).

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein. The scope of protection is defined by the appended claims.

## Claims

1. An air pressurisation system for an aircraft, the air pressurisation system comprising:
a blower compressor (420) configured to be mechanically coupled to a spool (440) of a gas turbine engine (10) and configured to receive a first inlet flow of air from a bypass duct (22) of the gas turbine engine;
a delivery line (310) configured to convey air compressed by the blower compressor to a cabin pressurisation system of the aircraft; and
a core bleed line (410) configured to selectively provide a second inlet flow of gases from a compressor (412) of the gas turbine engine to the delivery line (310) in an augmented air supply mode of the air pressurisation system;
**characterized by** an air/oil separator (500, 600) arranged in the core bleed line for removing contaminating oil and oil mist from the second inlet flow of gases before the second inlet flow of gases is provided to the delivery line.

2. The air pressurisation system of claim 1, wherein the air/oil separator (500, 600) is a centrifugal air/oil separator, wherein a rotor (550, 650) of the air/oil separator is configured to rotate about a rotor axis (Aᵣ) of the air/oil separator in order to separate oil from the second inlet flow of gases.

3. The air pressurisation system of claim 2, wherein the air/oil separator (500, 600) comprises one or more vanes (570, 670), wherein at least a portion of the second inlet flow of gases is directed to pass over the vanes, and wherein rotation of the air/oil separator is driven by virtue of the gases passing over the vanes.

4. The air pressurisation system of claim 2 or claim 3, wherein the air/oil separator (500, 600) comprises an air outlet (504, 604) for the air to pass out of the air/oil separator, wherein the air outlet (504, 604) is in fluidic communication with a hollow interior (554, 654) of the rotor.

5. The air pressurisation system of claim 4, wherein the air/oil separator (500, 600) comprises a housing (510, 610) and an air/oil inlet (502, 602) for the second inlet flow of gases to enter the housing, and wherein the air/oil separator comprises a volume of metal foam arranged in a flow of the gases between the air/oil inlet (502, 602) and the air outlet (504, 604), wherein the metal foam is configured to separate oil and oil mist from the flow of gases passing between the air/oil inlet and the air outlet through the metal foam.

6. The air pressurisation system of claim 5, wherein the volume of metal foam is coupled to the rotor (550, 650).

7. The air pressurisation system of claim 5 or claim 6, wherein:
the air/oil separator (500, 600) comprises one or more vanes (570, 670), at least a portion of the second inlet flow of gases is directed to pass over the vanes, rotation of the air/oil separator being driven by virtue of the gases passing over the vanes;
the air/oil separator (500, 600) comprises a first channel (532, 642) for gases to pass from the air/oil inlet (502, 602) towards the air outlet (504, 604) and a second channel (534, 644) for gases to pass from the air/oil inlet towards the air outlet; and
the metal foam is arranged at least partially within the first channel and the vanes (570, 670) are arranged at least partially within the second channel.

8. The air pressurisation system of claim 7, wherein the air/oil separator (500, 600) comprises an oil outlet (506) for oil separated from the second inlet flow of gases by the metal foam within the first channel (532, 642) to leave the air/oil separator (500, 600).

9. The air pressurisation system of claim 7 or claim 8, wherein the air/oil separator (500, 600) further comprises a seal (580, 680) arranged in the second channel (534, 644) for limiting a flow of gases through the second channel.

10. The air pressurisation system of any of the preceding claims, wherein:
the air/oil separator (500, 600) is a centrifugal air/oil separator, a rotor (550, 650) of the air/oil separator is configured to rotate about a rotor axis (Aᵣ) of the air/oil separator in order to separate oil from the second inlet flow of gases;
the air/oil separator (500, 600) comprises a housing (510, 610) and an air/oil inlet (502, 602) for the second inlet flow of gases to enter the housing;
the housing (510, 610) comprises a first annular chamber extending about the rotor (550, 650), wherein the air/oil inlet (502, 602) is an inlet into the first annular chamber;
the housing (510, 610) further comprises a second annular chamber extending about the rotor (550, 650);
the second annular chamber is in fluidic communication with the first annular chamber via the first and second channels; and
the air/oil separator further comprises a third channel (646) for gases to pass from the second annular chamber towards the air outlet (504, 604), wherein a further volume of metal foam is arranged within the third channel.

11. The air pressurisation system of claim 10, wherein the air/oil separator (500, 600) comprises a further oil outlet (506) formed in a wall of the housing (510, 610) for oil separated from the second inlet flow of gases by the further volume metal foam within the third channel (646) to leave the housing.

12. The air pressurisation system of any of the preceding claims, wherein the air/oil separator (500, 600) comprises a catalyst material configured to catalyse a reaction of volatile organic compounds within the air pressurisation system.

13. The air pressurisation system of any of the preceding claims, wherein the air/oil separator (500, 600) further comprises a motor/generator (560, 660) configured to drive rotation of the air/oil separator in a driving mode of the motor generator, optionally wherein the motor/generator (560, 660) is configured to be driven by the air/oil separator (500, 600) and generate electricity in a driven mode of the motor generator.

14. The air pressurisation system of any one of the preceding claims, wherein:
the air/oil separator (500, 600) is a centrifugal air/oil separator, a rotor (550, 650) of the air/oil separator being configured to rotate about a rotor axis (Aᵣ) of the air/oil separator in order to separate oil from the second inlet flow of gases; and
the air/oil separator (500, 600) further comprises one or more air bearings (590, 690), wherein the one or more air bearings are configured to receive a portion of the second inlet flow of gases in order to support rotation of the rotor (550).

15. An aircraft (800) comprising an airframe (810), a gas turbine engine (10) and the air pressurisation system (401) of any preceding claim.
